# EUROPÄISCHE PATENTSCHRIFT

(11) **EP 2 438 650 B1**
(45) Veröffentlichungstag und Bekanntmachung des Hinweises auf die Patenterteilung: **22.08.2018**
(21) Anmeldenummer: 10723096.3
(22) Anmeldetag: 28.05.2010
(51) Int. Cl.: H01Q 9/28, H01Q 13/04, H01Q 1/32, H01Q 19/10

(54) **FAHRZEUGANTENNENVORRICHTUNG MIT HORIZONTALER HAUPTSTRAHLRICHTUNG**
VEHICULAR ANTENNA WITH HORIZONTAL MAIN BEAM DIRECTION
ANTENNE DE VÉHICULE AVEC UNE DIRECTION DU FAISCEAU PRINCIPAL HORIZONTALE

(30) Priorität: 03.06.2009 DE 102009026694; 11.05.2010 DE 102010028881
(43) Veröffentlichungstag der Anmeldung: 11.04.2012
(73) Patentinhaber: Continental Teves AG & Co. oHG, 60488 Frankfurt (DE)
(72) Erfinder: SCHRÄBLER, Sighard, 60385 Frankfurt (DE); STRUNCK, Sebastian, 65428 Rüsselsheim (DE); SCHIRLING, Andreas, 64319 Pfungstadt (DE); STÄMMLER, Michael, 64625 Bensheim (DE); MENZEL, Marc, 35043 Marburg (DE)
(74) Vertreter: Bonn, Roman Klemens
(86) Internationale Anmeldenummer: PCT/EP2010/057498
(87) Internationale Veröffentlichungsnummer: WO 2010/139647

(56) Entgegenhaltungen:
- WO-A1-2008/155219
- GB-A- 2 165 097
- US-A- 2 532 551
- US-A- 5 534 880
- US-A- 5 600 340
- US-A1- 2007 241 980
- US-B1- 7 456 799

## Beschreibung

### GEBIET DER ERFINDUNG

Die Erfindung betrifft die Fahrzeugkommunikation mittels Antennen. Insbesondere betrifft die Erfindung ein Fahrzeug mit einer Fahrzeugantennenvorrichtung, die Verwendung der Fahrzeugantennenvorrichtung sowie ein Verfahren zum Senden oder Empfangen von elektromagnetischen Signalen.

### TECHNOLOGISCHER HINTERGRUND

Die Fahrzeug-zu-Fahrzeug Kommunikation (Car-to-Car-Kommunikation, C2C) ist der direkte Informationsaustausch zwischen fahrenden Fahrzeugen. Mit dieser mobilen Kommunikation können funktionsfähige Funknetze und neue Anwendungen realisiert werden. Dazu gehören rechtzeitige Informationen über Straßen- und Verkehrsverhältnisse wie Glatteis, Aquaplaning, Unfälle oder stehengebliebene Fahrzeuge. Bei dieser sicherheitsrelevanten Anwendung sendet beispielsweise der entsprechende Verkehrsteilnehmer mit den Daten aus dem Navigationssystem den Hinweis auf den Gefahrenort. Weitere, den Verkehrsfluss betreffende Informationen, können Hinweise über Ampelphasen, Stop-and-Go-Fahrten oder ständiges Anfahren und Anhalten an Baustellen sein. Auch kann die Parkplatzsuche respektive die Information über freie Parkplatzkapazitäten in eine solche Fahrzeug-zu-Fahrzeug-Kommunikation einbezogen werden.

Weiterhin ist die Fahrzeug-zu-X Kommunikation (Car-to-X-Kommunikation, C2X) als direkter Informationsaustausch zwischen einem fahrenden Fahrzeug und einem weiteren Teilnehmer beispielweise einer Infrastruktur bekannt. Damit können beispielsweise Telefondaten, WLAN-Nutzungen oder UMTS-Signale von dem Fahrzeug, aber auch an das Fahrzeug übermittelt werden. Weiterhin spielt im heutigen Verkehr die Verbindung zwischen dem Fahrzeug und Satelliten für die Navigation des Benutzers eine zunehmend wichtigere Rolle. Dabei sind die Kommunikationsteilnehmer, die mit dem Fahrzeug zur Kommunikation in Verbindung treten, an unterschiedlichsten Orten angesiedelt.

Dem US Patent Nr. US7456799 B1 kann eine breitbandige bikonische Antenne zur Montage auf dem Dach eines Fahrzeuges entnommen werden. Weiterer Stand der Technik findet sich in den folgenden Druckschriften: US5600340 A, GB2165097 A, US2532551 A und US5534880 A.

### ZUSAMMENFASSUNG DER ERFINDUNG

Es kann als eine Aufgabe der Erfindung angesehen werden, die Kommunikationsfähigkeit von Fahrzeugen zu verbessern.

Es sind ein fahrzeug mit einer Fahrzeugantennenvorrichtung, die Verwendung der Fahrzeugantennenvorrichtung des fahrzeugs sowie ein Verfahren zum Senden oder Empfangen von elektromagnetischen Signalen gemäß den Merkmalen der unabhängigen Patentansprüche angegeben. Weiterbildungen und weitere Vorteile der Erfindung ergeben sich aus den Unteransprüchen.

Gemäß einem Ausführungsbeispiel der Erfindung ist ein Fahrzeug mit einer Fahrzeugantennenvorrichtung zum Senden oder Empfangen von elektromagnetischen Signalen einer ersten Frequenz angegeben. Dabei weist die Fahrzeugantennenvorrichtung einen Erreger zum Erzeugen oder zum Empfangen der elektromagnetischen Signale und eine erste Reflexionsvorrichtung auf. Dabei ist die erste Reflexionsvorrichtung in Kombination mit der Reflexion an dem Dach des Fahrzeuges zur Reflexion der zu sendenden oder der zu empfangenden elektromagnetischen Signale und zur gleichzeitigen Absenkung einer Hauptstrahlrichtung der Vorrichtung in horizontaler Richtung ausgeführt.
Die Reflektionseigenschaft der Reflexionsvorrichtung lässt sich in diesem und in jedem anderen Ausführungsbeispiel auch als Bündelungseigenschaft bezeichnen, die der Strahlformung dient. Mit anderen Worten ist die erste Reflexionsvorrichtung zur Bündelung der zu sendenden oder der zu empfangenden elektromagnetischen Signale und zur Strahlformung ausgeführt.
Es wird somit in der Fahrzeugantennenvorrichtung durch die Reflektionsvorrichtung eine doppelte Spiegelung der zu sendenden und / oder der zu empfangenden elektromagnetischen Signale erreicht.
Mit anderen Worten ist die erste Reflexionsvorrichtung derart an dem Fahrzeug angeordnet, dass in Kombination mit dem Fahrzeugdach und dessen Reflexionen der elektromagnetischen Signale die gewünschte Absenkung der Hauptstrahlrichtung der Fahrzeugantennenvorrichtung in horizontaler Richtung erfolgt.

Unter dem Begriff "Dach des Fahrzeuges" oder "Fahrzeugdach" kann im Kontext der Erfindung jede weitere elektrisch leitende, äußere Oberfläche des Fahrzeuges angesehen werden.
Beispielsweise kann der Begriff "Dach des Fahrzeuges" auch durch andere Oberflächen wie beispielsweise Kofferraum, Motorhaube, Unterboden, oder Seitenfläche des Fahrzeuges ersetzt werden.
Somit wird die Hauptstrahlrichtung der
Fahrzeugantennenvorrichtung aufgrund des Vorhandenseins der ersten Reflexionsvorrichtung von einer himmelwärts gerichteten Richtung weiter zu einer möglichst zu dem Autodach parallelen Richtung abgesenkt.
Aufgrund der Fahrzeugantennenvorrichtung kann erreicht werden, dass beispielsweise die gesendeten Signale der Fahrzeugantennenvorrichtung eine höhere Anzahl an Kommunikationspunkten einer Infrastruktur erreicht, da die Hauptstrahlrichtung der Fahrzeugantennenvorrichtung nun nicht mehr Richtung Himmel zeigt. Somit wird der Hauptteil der ausgesendeten Energie der Fahrzeugantennenvorrichtung in die richtige Richtung ausgesandt.
Ebenso tritt dieser Vorteil beim Empfang von elektromagnetischen Signalen durch die Fahrzeugantennenvorrichtung auf.

Ist der Erreger zwischen einer Fahrzeugoberfläche wie beispielsweise einem Autodach und der ersten Reflexionsvorrichtung angeordnet, so wird aufgrund der Erfindung eine Verdoppelung der Spiegelung verursacht, wodurch die gewünschte Absenkung der Hauptstrahlrichtung der Fahrzeugantennenvorrichtung in horizontaler Richtung erfolgt.

Dabei kann in diesem und in jedem anderen Ausführungsbeispiel der Erfindung die erste Reflexionsvorrichtung, sowie auch weitere Reflexionsvorrichtungen, aus einem elektrisch leitenden Material gefertigt sein. Dabei ist es ebenso möglich, dass diese Reflexionsvorrichtungen ganz oder auch teilweise aus elektrisch leitendem Material bestehen.

Ebenso kann die Fahrzeugantennenvorrichtung als einkomponentiges Bauteil ausgeführt sein, welche als gesamtes Bauteil beispielsweise auf einer leitenden Fahrzeugoberfläche angebracht wird. Aber auch eine Ausführung in mehreren Bauteilen ist möglich. Beispielsweise sind Erreger und die erste Reflexionsvorrichtung baulich getrennt.

Ebenso kann in diesem und jedem Ausführungsbeispiel der Erfindung mit dem Begriff "Frequenz" eine einzelne Frequenz oder auch ein Frequenzbereich gemeint sein. Mit anderen Worten kann mit der Fahrzeugantennenvorrichtung, falls gewünscht, ein breites Frequenzspektrum gesendet oder auch empfangen werden. Weiterhin kann die Fahrzeugantennenvorrichtung auf eine gewünschte Hauptfrequenz hin baulich optimiert sein, beispielsweise duch den Abstand der ersten Reflektionsvorrichtung in Montageposition von dem Dach des Fahrzeuges oder von einer zweiten Reflektionsvorrichtung.

Aufgrund der Fahrzeugantennenvorrichtung kann einerseits ein Antennengewinn erreicht werden. Beispielsweise kann die Direktivität etwa 1,5- bis 2-fach so hoch ausfallen im Vergleich zu einem einfachen Dipol. Da auch die Hauptstrahlrichtung angepasst wird und die Fahrzeugantennenvorrichtung zum Senden und Empfangen genutzt werden kann, kann sich in diesem Beispiel ein Vorteil von einem Faktor 4 bis 10 gegenüber einer einfachen Stabantenne ergeben.

Weiterhin kann beispielsweise der Abstand zwischen der Reflexionsvorrichtung und einer zweiten reflektierenden Oberfläche des Fahrzeuges derart angepasst sein, dass die geringste Frequenz, welche man noch übertragen bzw. empfangen möchte bzw. die Hälfte der dazu korrespondierenden Wellenlänge gerade noch in den Abstand zwischen dieser Reflexionsvorrichtung und der leitenden Fahrzeugoberfläche hineinpasst.

Weiterhin ist es möglich, dass die Reflexionsvorrichtung in ihrer horizontalen Ausdehnung zumindest einer Wellenlänge einer zu übertragenden bzw. zu empfangenden elektromagnetischen Welle entspricht. Diese elektromagnetische Welle entspricht den zu sendenden oder zu empfangenden elektromagnetischen Signalen.

Jedoch ist es in diesem und in jedem anderen Ausführungsbeispiel möglich, falls gewünscht, die Fahrzeugantennenvorrichtung an weiteren Oberflächen des Fahrzeuges anzubringen und den gewünschten, vorangegangenen und nachfolgenden beschriebenen Effekt der absenkenden Ausrichtung der Hauptstrahlrichtung der Fahrzeugantenne hin zu weiteren Fahrzeugen oder anderen Kommunikationsteilnehmern zu erzielen.

Mit anderen Worten wird dadurch eine Antenne mit nahezu horizontaler Hauptstrahlrichtung erreicht, wodurch sich elektromagnetische Signale in gewünschte Richtung abgeben bzw. empfangen lassen, ein erhöhter Gewinn der Antenne vorliegt und dies auch für einen breiten Frequenzbereich erreicht werden kann.

Dieses Ausführungsbeispiel der Erfindung ermöglicht durch zusätzliche Reflektion an der ersten Reflektionsvorrichtung eine Absenkung der Hauptstrahlrichtung von einer senkrechten zu einer horizontalen Strahlcharakteristik.

In diesem und jedem anderen Ausführungsbeispiel können innerhalb des Fahrzeuges die elektromagnetischen Signale sowohl drahtlos als auch drahtgebunden übertragen werden. Beispielsweise kann dies über Bluetooth, USB, WLAN oder auch durch Übertragungstechniken und Übertragungsmedien erfolgen.

Dabei soll unter dem Begriff "Fahrzeug" im gesamten Kontext der Erfindung beispielsweise ein Auto, ein Bus oder Lastkraftwagen, oder aber auch ein Schienenfahrzeug, ein Schiff, ein Luftfahrzeug, wie ein Helikopter oder Flugzeug oder beispielsweise ein Fahrrad verstanden werden.

Gemäß einem weiteren Ausführungsbeispiel der Erfindung ist der Erreger als Rundstrahler mit einer 360°-Strahlcharakteristik um die Fahrzeughochachse ausgeführt.

Mit anderen Worten kann somit ein um das Fahrzeug herum rotationssymmetrisches Emissions- bzw. Empfangsprofil der Fahrzeugantennenvorrichtung erreicht oder falls gewünscht daran angenähert werden.

Aufgrund der Verdoppelung der Spiegelung, welche durch die erste Reflexionsvorrichtung und eine dazu korrespondierende reflektierende Oberfläche des Fahrzeuges, oder auch durch eine zweite Reflektionsvorrichtung erreicht wird, entsteht eine Art Leuchtturm für die zu sendende bzw. zu empfangende Strahlung, welcher Leuchtturm den gesamten Horizont um das Fahrzeug herum gleichzeitig abzudecken vermag bzw. von dort empfängt.

Somit kann ein weiterer Antennengewinn und eine erhöhte Direktivität gegenüber bisherigen Stabantennen in Fahrzeugen erreicht werden, was die Erreichbarkeit des Teilnehmers im Fahrzeug erhöhen kann. Damit kann auch ein erhöhter Sicherheitsgewinn korrespondieren, falls verkehrstechnisch kritische Situationen entstehen.

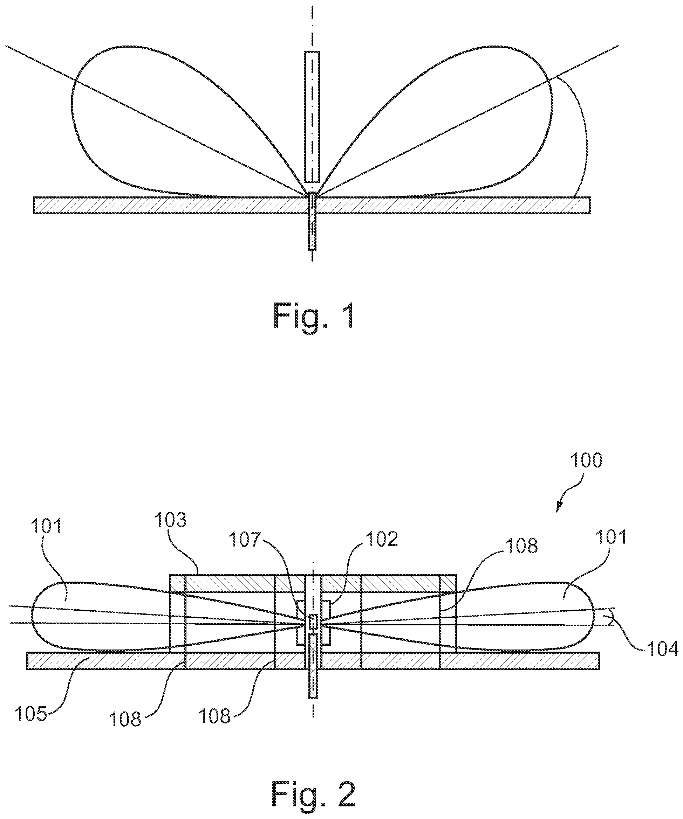

Gemäß der Erfindung ist die erste Reflexionsvorrichtung oberhalb eines Dachs des Fahrzeugs angeordnet und der Erreger ist zwischen dem Dach und der ersten Reflexionsvorrichtung angeordnet.
Gemäß diesem Ausführungsbeispiel, welches beispielhaft in der folgenden Fig. 2 beschrieben ist, entsteht die Verdoppelung der Spiegelung durch die elektrisch leitende erste Reflexionsvorrichtung oberhalb des Erregers in Kombination mit der Reflexion an dem Dach des Fahrzeuges.
Gemäß einem weiteren Ausführungsbeispiel der Erfindung ist die erste Reflexionsvorrichtung als Fläche ausgebildet und die erste Reflexionsvorrichtung ist parallel zu dem Dach des Fahrzeuges angeordnet.

Wie dem Ausführungsbeispiel der Fahrzeugantennenvorrichtung in Fig. 2 zu entnehmen ist, werden die Reflexionsvorrichtungen vornehmlich parallel zu dem Dach des Fahrzeuges angeordnet. Dabei kann die Reflexionsvorrichtung der Oberfläche des Dachs in seiner Größe entsprechen oder auch kleiner oder größer sein.
Damit kann erreicht werden, dass parallel zum Dach des Fahrzeuges und in dieser Ebene die gewünschten elektromagnetischen Signale gesendet oder empfangen werden können. Dies gilt für alle Ausführungsbeispiele der Erfindung.

Gemäß einem weiteren Ausführungsbeispiel der Erfindung ist der Erreger als Dipolerreger ausgeführt und der Dipolerreger ist torusförmig um einen nicht leitenden Zylinder ausgebildet.

Dabei kann der Erreger beispielsweise als mittengespeister Dipol realisiert sein. Somit liegt in der Mitte der Antenne eine Symmetrieebene. Weiterhin kann der Zylinder Teil dieses Ausführungsbeispiels sein. Weiterhin kann der Zylinder derart ausgeführt sein, dass ein sogenannter Balun-Transformator in den Zylinder hineinpasst. Dieser Balun-Transformator kann in einem weiteren Ausführungsbeispiel auch in diesem Zylinder angeordnet sein.

Gemäß einem weiteren Ausführungsbeispiel der Erfindung weist die Fahrzeugantennenvorrichtung weiterhin einen Balun-Transformator auf, wobei der Balun-Transformator zur Anpassung eines unsymmetrischen Signals einer Zuleitung des Erregers an einem erdsymmetrischen Dipol ausgeführt ist, wobei der Balun-Transformator innerhalb des Erregers angeordnet ist.

Dadurch kann erreicht werden, dass sich die gewünschte Richtcharakteristik einstellt, da gemäß diesem Ausführungsbeispiel eine Anpassung an die symmetrische Antenne erfolgt.

Gemäß einem weiteren Ausführungsbeispiel der Erfindung weist die Fahrzeugantennenvorrichtung weiterhin ein Verbindungselement mit einem ersten und einem zweiten Ende auf, wobei das Verbindungselement vertikal zwischen der ersten Reflexionsvorrichtung und dem Dach des Fahrzeuges verläuft. Weiterhin ist das erste Ende des Verbindungselements mit dem Dach des Fahrzeuges und das zweite Ende des Verbindungselements mit der Reflexionsvorrichtung verbunden.

Beispielsweise können die Verbindungselemente als elektrisch leitende Stäbe ausgeführt sein, die unterschiedlichste Formen aufweisen können. Weiterhin beispielhaft können die leitenden Stäbe das Dach des Fahrzeuges als untere Masse mit der ersten Reflexionsvorrichtung als obere Masse elektrisch verbinden. Dies ist beispielhaft in der folgenden Fig. 2 gezeigt und beschrieben.
Diese erdunsymmertrische Ausgestaltung der Antenne kann besondere Vorteile aufweisen. Beispielsweise kann eine geringe Bauhöhe erreicht werden oder auch eine vereinfachte Anpassung wird dadurch erreicht. Das Dach des Fahrzeuges ist dabei als Teil des Dipols ausgeführt und ist nicht nur ein Reflektor.

Weiterhin ist es möglich, diese Verbindungselemente als tragende strukturelle Bauteile der Fahrzeugantennenvorrichtung auszuführen, so dass beispielsweise die erste Reflexionsvorrichtung, falls gewünscht, massiver ausgestaltet werden könnte. Ebenso ist es dadurch möglich, beispielsweise auf eine mechanische Stütze im mittigen Bereich der ersten Reflexionsvorrichtung, wo beispielsweise die Zuleitung des Erregers verlaufen kann, zu verzichten. Dieser Zuleitungsverlauf ist beispielhaft in der Fig. 2 gezeigt. Mit anderen Worten könnten dadurch die Bereiche, in welchen die elektromagnetischen Signale der Antennenvorrichtung zugeführt werden, von strukturell stützenden Bauteilen frei bleiben.

Gemäß einem weiteren Ausführungsbeispiel der Erfindung weist die Fahrzeugantennenvorrichtung weiterhin eine zweite Antennenvorrichtung zum Senden oder Empfangen von elektromagnetischen Signalen einer zweiten Frequenz auf. Dabei ist die zweite Antennenvorrichtung oberhalb der ersten Reflexionsvorrichtung angeordnet.

Mit anderen Worten wird damit eine Fahrzeugantennenvorrichtung gemäß einem der vorherigen Ausführungsbeispiele beschrieben, bei welchem nun aber zusätzlich beispielsweise als zweite Antennenvorrichtung ein GPS-Sender und/oder Empfänger oberhalb der ersten Reflexionsvorrichtung angeordnet ist. Mit anderen Worten wird die erfindungsgemäße Idee der Verdoppelung der Spiegelung kombiniert mit einer weiteren Antenne für einen zweiten Frequenzbereich, mit der normal, also beispielsweise besonders himmelwärts gesendet oder empfangen werden soll.

Dabei ist in diesem und in jedem anderen Ausführungsbeispiel unter dem Begriff "Frequenz" sowohl eine einzelne elektromagnetische Frequenz als auch ein mehr oder weniger breites Frequenzspektrum zu verstehen.

Beispielsweise kann in diesem und in jedem anderen Ausführungsbeispiel die Absenkung der Hauptstrahlrichtung durch die erste Reflexionsvorrichtung für eine C2C- oder C2X Kommunikation verwendet werden.

Hingegen kann gemäß diesem Ausführungsbeispiel die zweite Antennenvorrichtung eine zweite Datenverbindung zum Beispiel mit GPS-Satelliten herstellen, welche zweite Datenverbindung nicht in horizontaler Richtung abgesenkt werden soll.

Gemäß einem weiteren Ausführungsbeispiel der Erfindung ist die erste Reflexionsvorrichtung in einem Abstand zu dem Dach des Fahrzeuges angeordnet, der zumindest einer halben Wellenlänge der zu sendenden oder zu empfangenden elektromagnetischen Signale entspricht.

Mit anderen Worten wird durch die erste Reflexionsvorrichtung und das Dach des Fahrzeuges, welche beide elektrisch leitende Oberflächen darstellen, eine Art Kavität bereitgestellt, in welcher die elektromagnetischen Signale reflektiert werden. Der Abstand dieser beiden Oberflächen kann gemäß der Erfindung nun so gewählt werden, dass beispielsweise ein Vielfaches einer halben Wellenlänge einer gewünschten elektromagnetischen Frequenz in diesem Bereich vertikal hineinpasst.
Dies kann natürlich auch für mehrere elektromagnetsiche Frequenzen so ausgeführt sein.

Gemäß einem weiteren Ausführungsbeispiel der Erfindung weist das Fahrzeug ein Fahrzeugantennenmodul zum Senden und Empfangen von elektromagnetischen Signalen in einer ersten und einer zweiten Frequenz auf. Das Fahrzeugantennenmodul weist eine erste Fahrzeugantennenvorrichtung mit einem ersten Erreger zur Erzeugung und zum Empfangen elektromagnetischer Signale der ersten Frequenz und eine erste Reflexionsvorrichtung auf. Dabei ist die erste Reflexionsvorrichtung zur Reflexion der zu sendenden und zu empfangenden elektromagnetischen Signale der ersten Frequenz und zur gleichzeitigen Absenkung einer Hauptstrahlrichtung des ersten Erregers in horizontaler Richtung ausgeführt. Weiterhin weist das Fahrzeugmodul eine zweite Fahrzeugantennenvorrichtung mit einem zweiten Erreger zur Erzeugung und zum Empfangen elektromagnetischer Signale der zweiten Frequenz und eine zweite Reflexionsvorrichtung auf, wobei die zweite Reflexionsvorrichtung zur Reflexion der zu sendenden und zu empfangenden elektromagnetischen Signale der zweiten Frequenz und zur gleichzeitigen Absenkung einer Hauptstrahlrichtung des zweiten Erregers in horizontaler Richtung ausgeführt ist.
Mit anderen Worten kann die erfindungsgemäße Idee der Absenkung der Hauptstrahlrichtung mittels zusätzlicher Reflexionsvorrichtungen durch dieses Fahrzeugantennenmodul zweifach bereitgestellt werden. Mit anderen Worten kann für zwei verschiedene Frequenzen bzw. für zwei verschiedene Frequenzbereiche diese Absenkung der jeweiligen Hauptstrahlrichtung durch eine jeweilige Verdoppelung der Spiegelung erreicht werden.

Da die jeweilige Fahrzeugantennenvorrichtung optimal auf einen gewissen Frequenzbereich abgestimmt werden kann, können somit beispielsweise über die erste Fahrzeugantennenvorrichtung beispielsweise UMTS-Signale in horizontaler Ebene mit erhöhtem Gewinn gesendet und empfangen werden und beispielsweise über die zweite Fahrzeugantennenvorrichtung beispielsweise WLAN-Signale mit erhöhtem Gewinn und in horizontaler Richtung gesendet und empfangen werden.
Dabei sind die oben genannten Anwendungen mit bestimmten Frequenzbereichen nur beispielhaft genannt, auch andere Frequenzbereiche, Übertragungsprotokolle und Kombinationen davon sind möglich.

Dabei wird für die zuunterst angeordnete Fahrzeugantennenvorrichtung das Fahrzeugdach, wie bereits beschrieben, als Reflexionsfläche verwendet. Gemäß einem weiteren Ausführungsbeispiel der Erfindung sind die beiden Fahrzeugantennenvorrichtungen des Fahrzeugantennenmoduls oberhalb des Dachs des Fahrzeuges und horizontal übereinander angeordnet.

Gemäß der Erfindung ist ein Fahrzeug mit einer Fahrzeugantennenvorrichtung oder einem Fahrzeugantennenmodul gemäß einem der vorherigen Ausführungsbeispiele angegeben.
Gemäß einem weiteren Ausführungsbeispiel der Erfindung ist die Verwendung der Fahrzeugantennenvorrichtung des Fahrzeugs gemäß einem der vorherigen Ausführungsbeispiele zur Fahrzeug-zu-X Kommunikation angegeben. Gemäß einem weiteren Ausführungsbeispiel der Erfindung ist ein Verfahren zum Senden oder Empfangen von elektromagnetischen Signalen einer ersten Frequenz zwischen einem Fahrzeug gemäß einem der vorherigen Ausführungsbeispiele angegeben und einem weiteren Teilnehmer angegeben, wobei das Verfahren die folgenden Schritte aufweist: Erzeugen eines elektromagnetischen Signals, Abstrahlen des elektromagnetischen Signals zwischen einem Dach des Fahrzeuges und einer Reflexionsvorrichtung, Reflektieren des abgestrahlten elektromagnetischen Signals sowohl an dem Dach des Fahrzeuges wie auch an der Reflexionsvorrichtung, wodurch sich eine Absenkung der Hauptstrahlrichtung in horizontaler Richtung. Es sei darauf hingewiesen, dass im gesamten Kontext der vorliegenden Erfindung GPS stellvertretend für sämtliche globale Navigationssatellitensysteme (GNSS) steht, wie zum Beispiel GPS, Galileo, GLONASS (Russland), COMPASS (China), und IRNSS (Indien).
Im Folgenden werden mit Verweis auf die Figuren Ausführungsbeispiele der Erfindung beschrieben.

### KURZE BESCHREIBUNG DER FIGUREN

Fig. 1 zeigt als technischen Hintergrund der Erfindung eine Stabantenne auf einer Oberfläche.
Fig. 2 zeigt eine Fahrzeugantennenvorrichtung gemäß einem Ausführungsbeispiel der Erfindung.
Fig. 3 zeigt eine Fahrzeugantennenvorrichtung gemäß einem Beispiel.
Fig. 4 zeigt Fahrzeuge mit einer Fahrzeugantennenvorrichtung gemäß einem Ausführungsbeispiel der Erfindung.
Fig. 5 zeigt ein Flussdiagramm eines Verfahrens gemäß einem Ausführungsbeispiel der Erfindung.

### DETAILLIERTE BESCHREIBUNG VON AUSFÜHRUNGSBEISPIELEN

Die Darstellungen in den Figuren sind schematisch und nicht maßstäblich.

In der folgenden Figurenbeschreibung werden für die gleichen oder ähnlichen Elemente die gleichen Bezugsziffern verwendet.

Fig. 1 zeigt eine Stabantenne, welche oberhalb einer Oberfläche angeordnet ist. Aufgrund der Spiegelung an der Oberfläche und an der leitenden Erde zeigt die Hauptstrahlrichtung dieser Stabantenne in Richtung Himmel. Dabei stellt die Oberfläche hier die Erde dar.

Fig. 2 zeigt eine Fahrzeugantennenvorrichtung 100 zum Senden oder Empfangen von elektromagnetischen Signalen 101 einer ersten Frequenz gemäß einem Ausführungsbeispiel der Erfindung. Dabei weist die Fahrzeugantennenvorrichtung einen Erreger 102 zum Erzeugen oder zum Empfangen der elektromagnetischen Signale auf und weist eine erste Reflexionsvorrichtung 103 auf. Dabei ist die erste Reflexionsvorrichtung zur Reflexion der zu sendenden oder zu empfangenden elektromagnetischen Signale und zur gleichzeitigen Absenkung einer Hauptstrahlrichtung 104 der Vorrichtung in horizontaler Richtung ausgeführt. Dabei entspricht die horizontale Richtung der Richtung, die von Rechts nach Links der Figur verläuft.

Die Reflektionseigenschaft der Reflexionsvorrichtung lässt sich in diesem und in jedem anderen Ausführungsbeispiel auch als Bündelungseigenschaft bezeichnen, die der Strahlformung dient. Mit anderen Worten ist die erste Reflexionsvorrichtung zur Bündelung der zu sendenden oder der zu empfangenden elektromagnetischen Signale und zur Strahlformung ausgeführt.

Es wird somit in der Fahrzeugantennenvorrichtung durch die Reflektionsvorrichtung eine doppelte Spiegelung der zu sendenden und / oder der zu empfangenden elektromagnetischen Signale erreicht.

In diesem Ausführungsbeispiel ist die Reflexionsvorrichtung 103 als elektrisch leitende Oberfläche parallel zu dem Dach des Fahrzeuges 105 ausgeführt. Sowohl der Erreger als auch die erste Reflexionsvorrichtung sind oberhalb des Daches angeordnet. Der Erreger befindet sich zwischen dem Dach und der Reflexionsvorrichtung. Dabei ist in diesem Ausführungsbeispiel der Erreger als Dipolerreger 106 ausgeführt.

Weiter ist ein Balun-Transformator 107 gezeigt, der beispielsweise zur Anpassung eines unsymmetrischen Signals einer Zuleitung des Erregers an einen erdsymmetrischen Dipol ausgeführt sein kann. Der Balun-Transformator ist wie gezeigt innerhalb des Erregers angeordnet.

Weiterhin ist es möglich, dass der Balun-Transformator zur Transformation einer Fußpunktimpedanz der gezeigten Fahrzeugantennenvorrichtung an eine Impedanz der Zuleitung ausgeführt ist. Anstatt des Baluns ist es zum Beispiel auch möglich eine Umwegleitung zu verwenden.

Zur Anpassung einer Antenne an die Zuleitung sind (meist) zwei Transformationen nötig:
Die Transformation der Impedanz, denn die Antennen-Fußpunktimpedanz am Einspeisepunkt kann größer sein als die Kabelimpedanz, die Wellen sollen aber nicht am Übergang reflektiert werden (z.B.Voll-Dipol 124 Ohm, Kabel 50 Ohm). Einige Antennen haben zum Teil noch deutlich größere Fußpunktimpedanzen (Vivaldi-Elemente: 500 Ohm).

Es kann erwünscht sein auch den Imaginärteil der Fußpunktimpedanz loszuwerden, der bedeutet nämlich Verluste.

Dann gibt es noch die Anpassung von unsymmetrisch nach symmetrisch: Beide Transformationen kann man für Frequenzen unter 10 GHz noch mittels sog. Balun-Transformatoren realisieren, über 100 MHz können, falls gewünscht, auch gerne die Umwegleitung und Lambda/4-Leitungen mit Eigenimpedanz sqrt(Z1*Z2) angewandt werden.

Weiterhin weist die Fahrzeugantennenvorrichtung mehrere Verbindungselemente 108 auf, welche zwischen der ersten Reflexionsvorrichtung und dem Dach des Fahrzeuges verlaufen.

Dieses hier gezeigte Ausführungsbeispiel der Erfindung ermöglicht die Verdoppelung der Spiegelung aufgrund der elektrisch leitenden Oberfläche 103. Dabei ist dieses Ausführungsbeispiel der Erfindung als symmetrische Antenne ausgeführt. Die Verbindungselemente 108 sind als leitende Stäbe ausgeführt, welche die untere Masse, das Dach des Fahrzeuges 105 und die obere Masse die erste Reflexionsvorrichtung 103 elektrisch verbinden. Wie der Fig. 2 zu entnehmen ist, ist die Hauptstrahlrichtung 104 nahezu parallel zu der Dachfläche 105 des Fahrzeuges und damit deutlich in horizontaler Richtung abgesenkt gegenüber dem Stand der Technik-Beispiel in Fig. 1.

Dabei kann der Abstand zwischen den beiden Platten, der ersten Reflexionsvorrichtung 103 und dem Dach des Fahrzeuges 105 λ/2 oder Vielfache davon betragen. Der Zwischenraum zwischen den beiden Platten könnte beispielsweise mit einem Dielektrikum ausgefüllt sein, um die Fahrzeugantennenvorrichtung tauglich für die Waschanlage und die Witterung zu machen. In diesem Fall verkleinert sich der Bauraum der Antenne, da die Lichtgeschwindigkeit im Dielektrikum entsprechend geringer ist, was als Vorteil hinsichtlich der Größe der Vorrichtung angesehen werden kann.

Nach einer Abschätzung der Übergewinngrenze nach Harrington kann man eine Antenne in eine Kugelschale mit dem Radius A einschließen. Mit der Kreisfrequenz ω und der Lichtgeschwindigkeit C folgt die Wellenzahl K=ω)/C. Für die Direktivität D bestimmt sich ein Maximalwert Dmax=(K*A)²+2*K*A. Mit der Annahme von beispielsweise λ/2=25,4 mm für F=5,9 GHz folgt etwa die Größe eines Martinshorns für die Antenne. Sofern in der Konstruktion der Antenne nicht allzu viele Kompromisse eingegangen werden müssen und da dies eine prinzipiell für den Frequenzbereich geeignete Konstruktion ist, wird die Übergewinngrenze auch annähernd erreicht.

Die Direktivität kann beispielsweise etwa 1,5- bis 2-fach so hoch ausfallen wie im Vergleich zu einem einfachen Dipol. Da auch die Hauptstrahlrichtung angepasst und die gezeigte Fahrzeugantennenvorrichtung der Fig. 2 zum Senden und Empfangen genutzt werden kann, ergibt sich ein Vorteil von beispielsweise Faktor 4 gegenüber einer einfachen Stabantenne. Dabei kann diese gezeigte Fahrzeugantennenvorrichtung sowohl für einen breiten Frequenzbereich ausgelegt sein, als auch an verschiedenen Stellen des Fahrzeuges positioniert werden.

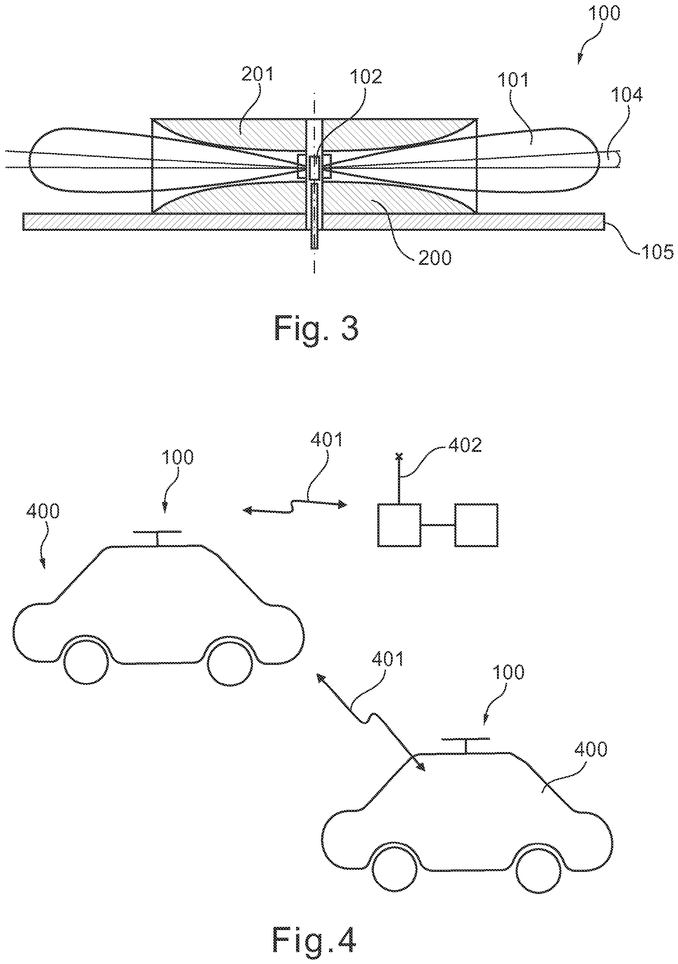

Fig. 3 zeigt eine Fahrzeugantennenvorrichtung 100 gemäß einem Beispiel. Dabei kann dieses Beispiel als Rundumhornantenne bezeichnet werden. Dabei kann von einer Vivaldi-Antenne ausgegangen werden, die man um die Symmetrieachse rotiert. Dieses Rundumhorn kann eine noch stärkere Bündelung erreichen.
Die Einkopplung mit dem Dipol, Balun und beispielsweise einer koaxialen Zuleitung kann gleich zur bereits beschriebenen Variante der Fig. 1 ausgeführt sein.
Aber auch andere technische Ausführungen dieser Fahrzeugantennenvorrichtung hinsichtlich der Aspekte des Erregers und der Zuleitung sind möglich.
Auch in Fig. 3 ist zu sehen, dass mit dieser Fahrzeugantennenvorrichtung die gewünschte Absenkung der Hauptstrahlrichtung 104 der Vorrichtung in horizontaler Richtung erreicht wird.
Fig. 4 zeigt eine perspektivische Darstellung zweier Fahrzeuge 400, welche mit Fahrzeugantennenvorrichtungen 100 ausgestattet sind. Mittels einer Datenverbindung 401 zwischen den beiden Fahrzeugen kann die sogenannte C2C Kommunikation erfolgen. Aufgrund der erfindungsgemäßen Absenkung der Hauptstrahlrichtung der Fahrzeugantennenvorrichtungen in horizontaler Richtung werden durch ein Fahrzeug der Aussendung elektromagnetischer Signale sowohl mehr andere Fahrzeuge erreicht als auch eine erhöhte Anzahl von empfangenen Signalen kann realisiert werden.

Ebenso ist eine Infrastruktur 402 gezeigt, welche beispielhaft als Kommunikationspartner hinsichtlich der C2X-Kommunikation dienen soll. Zwischen dem oberen linken Fahrzeug 400 und der Infrastruktur 402 ist ebenso eine Datenverbindung 401 hergestellt, wobei mittels der erfindungsgemäßen Fahrzeugantennenvorrichtung 100 die Hauptstrahlrichtung horizontal abgesenkt wurde und somit eine verbesserte Richtung der Richtstrahlcharakteristik und ein erhöhter Antennengewinn erzielt wird.

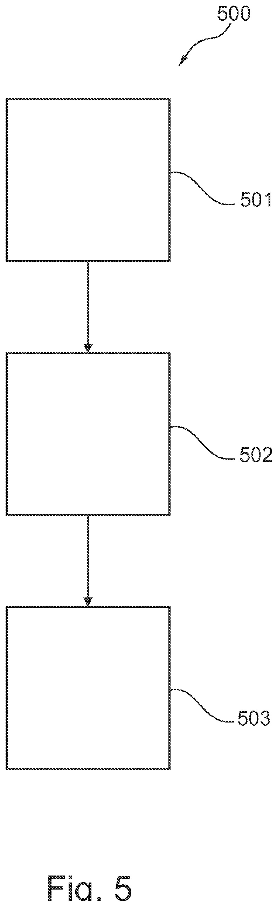

Gemäß einem weiteren Ausführungsbeispiel der Erfindung ist in Fig. 5 ein Flussdiagramm 500 eines Verfahrens gezeigt, welches drei Schritte beinhaltet. Mittels des Schritts 501 wird ein elektromagnetisches Signal erzeugt, welches daraufhin in dem Schritt 502 zwischen einem Dach des Fahrzeuges und einer ersten Reflexionsvorrichtung abgestrahlt wird. Der Schritt 503 beschreibt das Reflektieren des abgestrahlten elektromagnetischen Signals sowohl an dem Dach des Fahrzeuges wie auch an der ersten Reflexionsvorrichtung, wodurch sich eine Absenkung der Hauptstrahlrichtung ergibt.

Erfindungsgemäß wird dabei eine Verdoppelung der Spiegelung verursacht, was bei einer beispielsweisen Verwendung eines Dipolerregers, der eine 360°-Rundstrahlcharakteristik aufweist, in der gesamten 360°-Umgebung des Fahrzeuges zu nahezu parallel zum Horizont ausgesendeten elektromagnetischen Signalen führt. Dies gilt analog für den Empfang.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

Weiterhin sei explizit angemerkt, dass das oben beschriebene Verfahren in der genannten Reihenfolge erfolgen kann, jedoch auch anderen Reihenfolge der genannten Verfahrensschritte möglich sind.

## Patentansprüche

1. Fahrzeug (400) mit einer Fahrzeugantennenvorrichtung (100) zum Senden oder Empfangen von elektromagnetischen Signalen (101) einer ersten Frequenz,
wobei das Fahrzeug ein Dach aufweist,
wobei die Fahrzeugantennenvorrichtung (100) aufweist einen Erreger (102) zum Erzeugen oder zum Empfangen der elektromagnetischen Signale,
eine erste (103) und eine zweite (105) Reflektionsvorrichtung, wobei die erste Reflektionsvorrichtung oberhalb des Dachs (105) des Fahrzeuges angeordnet ist,
wobei der Erreger zwischen der zweiten und der ersten Reflektionsvorrichtung angeordnet ist,
wobei die erste (103) und die zweite (105) Reflektionsvorrichtung zur Reflektion der zu sendenden oder zu empfangenden elektromagnetischen Signale und, Aufgrund der Verdoppelung der Spiegelung, welche durch die erste und zweite Reflexionsvorrichtung erreicht wird, zur gleichzeitigen Absenkung einer Hauptstrahlrichtung (104) der Vorrichtung in horizontaler Richtung ausgeführt ist;
**dadurch gekennzeichnet, dass**
das Fahrzeugdach als die zweite Reflektionsvorrichtung (105) der einen Fahrzeugantennenvorrichtung (100) ausgeführt ist.

2. Fahrzeug gemäß Anspruch 1,
wobei der Erreger als Rundstrahler mit einer 360° Strahlcharakteristik um eine Fahrzeughochachse ausgeführt ist.

3. Fahrzeug gemäß einem der vorherigen Ansprüche,
wobei die erste Reflektionsvorrichtung als Fläche ausgebildet ist, und
wobei die erste Reflektionsvorrichtung parallel zu dem Dach des Fahrzeuges angeordnet ist.

4. Fahrzeug gemäß einem der vorherigen Ansprüche,
aufweisend einen nicht leitenden Zylinder,
wobei der Erreger als Dipolerreger (106) ausgeführt ist, und
wobei der Dipolerreger torusförmig um den nicht leitenden Zylinder ausgebildet ist.

5. Fahrzeug gemäß einem der vorherigen Ansprüche, die eine Fahrzeugantennenvorrichtung weiterhin aufweisend:
einen Balun-Transformator (107),
wobei der Balun-Transformator zur Anpassung eines unsymmetrischen Signals einer Zuleitung des Erregers an einen erdsymmetrischen Dipol ausgeführt ist, und
wobei der Balun-Transformator innerhalb des Erregers angeordnet ist.

6. Fahrzeug gemäß einem der vorherigen Ansprüche, die eine Fahrzeugantennenvorrichtung weiterhin aufweisend:
ein Verbindungselement (108) mit einem ersten und einem zweiten Ende,
wobei das Verbindungselement vertikal zwischen der ersten Reflektionsvorrichtung und dem Dach des Fahrzeuges verläuft, und
wobei das erste Ende des Verbindungselementes mit dem Dach des Fahrzeuges und das zweite Ende mit der ersten Reflektionsvorrichtung verbunden ist.

7. Fahrzeug gemäß einem der vorherigen Ansprüche, die eine Fahrzeugantennenvorrichtung weiterhin aufweisend:
eine zweite Antennenvorrichtung zum Senden oder Empfangen von elektromagnetischen Signalen einer zweiten Frequenz, und
wobei die zweite Antennenvorrichtung oberhalb der ersten Reflektionsvorrichtung angeordnet ist.

8. Fahrzeug gemäß einem der vorherigen Ansprüche,
wobei die erste Reflektionsvorrichtung in einem Abstand zu dem Dach des Fahrzeuges angeordnet ist, der zumindest einer halben Wellenlänge der zu sendenden oder zu empfangenden elektromagnetischen Signale entspricht.

9. Fahrzeug gemäß einem der vorherigen Ansprüche mit einem Fahrzeugantennenmodul zum Senden und Empfangen von elektromagnetischen Signalen der ersten und einer zweiten Frequenz, das Fahrzeugantennenmodul aufweisend:
die eine Fahrzeugantennenvorrichtung mit dem ersten Erreger zur Erzeugung und zum Empfangen elektromagnetischer Signale der ersten Frequenz,
das Fahrzeugantennenmodul weiterhin aufweisend:
eine zweite Fahrzeugantennenvorrichtung mit einem zweiten Erreger zur Erzeugung und zum Empfangen elektromagnetischer Signale der zweiten Frequenz,
eine zweite Reflektionsvorrichtung, und
wobei die zweite Reflektionsvorrichtung zur Reflektion der zu sendenden und zu empfangenden elektromagnetischen Signale der zweiten Frequenz und zur gleichzeitigen Absenkung einer Hauptstrahlrichtung des zweiten Erregers in horizontaler Richtung ausgeführt ist.

10. Fahrzeug gemäß Anspruch 9, wobei die beiden Fahrzeugantennenvorrichtungen oberhalb des Dachs des Fahrzeuges anbringbar sind und horizontal übereinander angeordnet sind.

11. Verwendung der Fahrzeugantennenvorrichtung (100) des Fahrzeugs (400) gemäß einem der Ansprüche 1 bis 10 zur Fahrzeug-zu-X Kommunikation.

12. Verfahren zum Senden oder Empfangen von elektromagnetischen Signalen einer ersten Frequenz zwischen dem Fahrzeug (400) gemäß einem der Ansprüche 1 bis 10 und einem weiteren Teilnehmer, wobei das Verfahren die Schritte aufweist:
Erzeugen eines elektromagnetischen Signals (501),
Abstrahlen des elektromagnetischen Signals (502) zwischen dem Dach des Fahrzeuges und der ersten Reflektionsvorrichtung,
wobei die erste Reflektionsvorrichtung oberhalb des Dachs des Fahrzeuges angeordnet ist,
wobei der Erreger zwischen dem Dach und der ersten Reflektionsvorrichtung angeordnet ist, und
Reflektieren des abgestrahlten elektromagnetischen Signals sowohl an dem Dach des Fahrzeuges wie auch an der ersten Reflektionsvorrichtung, wodurch sich eine Absenkung der Hauptstrahlrichtung in horizontaler Richtung ergibt (503).

## Claims

1. Vehicle (400) having a vehicle antenna apparatus (100) for transmission or reception of electromagnetic signals (101) at a first frequency,
wherein the vehicle has a roof, wherein the vehicle antenna apparatus (100) has
an exciter (102) for production or for reception of the electromagnetic signals,
a first (103) and a second (105) reflection apparatus,
wherein the first reflection apparatus is arranged above the roof (105) of the vehicle,
wherein the exciter is arranged between the second and the first reflection apparatus,
wherein the first (103) and the second (105) reflection apparatus is designed for reflection of the electromagnetic signals to be transmitted or to be received and, because of the doubling of the reflections which are achieved by the first and second reflection apparatus, for simultaneous lowering of a main beam direction (104) of the apparatus in the horizontal direction;
**characterized in that**
the vehicle roof is designed as the second reflection apparatus (105) of the one vehicle antenna apparatus (100) .

2. Vehicle according to Claim 1,
wherein the exciter is in the form of an omnidirectional antenna element having a 360° beam characteristic about a vehicle vertical axis.

3. Vehicle according to one of the preceding claims,
wherein the first reflection apparatus is in the form of a surface, and
wherein the first reflection apparatus is arranged parallel to the roof of the vehicle.

4. Vehicle according to one of the preceding claims, having a a non-conductive cylinder,
wherein the exciter is in the form of a dipole exciter (106) and
wherein the dipole exciter is in a toroidal shape about the non-conductive cylinder.

5. Vehicle according to one of the preceding claims, with the one vehicle antenna apparatus furthermore having:
a balun transformer (107),
wherein the balun transformer is designed for matching an asymmetric signal on a feed line to the exciter to a ground-symmetrical dipole, and
wherein the balun transformer is arranged within the exciter.

6. Vehicle according to one of the preceding claims, with the one vehicle antenna apparatus furthermore having:
a connection element (108) with a first and a second end,
wherein the connection element runs vertically between the first reflection apparatus and the roof of the vehicle, and
wherein the first end of the connection element is connected to the roof of the vehicle, and the second end is connected to the first reflection apparatus.

7. Vehicle according to one of the preceding claims, with the one vehicle antenna apparatus furthermore having:
a second antenna apparatus for transmission or reception of electromagnetic signals at a second frequency, and
wherein the second antenna apparatus is arranged above the first reflection apparatus.

8. Vehicle according to one of the preceding claims,
wherein the first reflection apparatus is arranged at a distance from the roof of the vehicle, which distance corresponds at least to half the wavelength of the electromagnetic signals to be transmitted or to be received.

9. Vehicle according to one of the preceding claims, having a vehicle antenna module for transmission and reception of electromagnetic signals at the first and a second frequency, with the vehicle antenna module having:
the one vehicle antenna apparatus with the first exciter for production and for reception of electromagnetic signals at the first frequency,
with the vehicle antenna module furthermore having:
a second vehicle antenna apparatus with a second exciter for production and for reception of electromagnetic signals at the second frequency,
a second reflection apparatus, and
wherein the second reflection apparatus is designed for reflection of the electromagnetic signals to be transmitted and to be received at the second frequency, and for simultaneous lowering of a main beam direction of the second exciter in the horizontal direction.

10. Vehicle according to Claim 9,
wherein the two vehicle antenna apparatuses can be attached above the roof of the vehicle and are arranged horizontally one above the other.

11. Use of the vehicle antenna apparatus (100) of the vehicle (400) according to one of Claims 1 to 10 for vehicle-to-X communication.

12. Method for transmission or reception of electromagnetic signals at a first frequency between the vehicle (400) according to one of Claims 1 to 10 and a further subscriber, wherein the method has the following steps:
production of an electromagnetic signal (501),
emission of the electromagnetic signal (502) between the roof of the vehicle and the first reflection apparatus,
wherein the first reflection apparatus is arranged above the roof of the vehicle,
wherein the exciter is arranged between the roof and the first reflection apparatus, and
reflection of the emitted electromagnetic signal both on the roof of the vehicle and on the first reflection apparatus, thus resulting in lowering of the main beam direction in the horizontal direction (503).

## Revendications

1. Véhicule (400) comportant un dispositif d'antenne de véhicule (100) destiné à émettre ou à recevoir des signaux électromagnétiques (101) à une première fréquence,
dans lequel ledit véhicule comporte un toit,
dans lequel ledit dispositif d'antenne de véhicule (100) comporte un excitateur (102) destiné à générer ou à recevoir les signaux électromagnétiques,
un premier (103) et un second (105) dispositif de réflexion,
dans lequel le premier dispositif de réflexion est disposé au-dessus du toit (105) du véhicule,
dans lequel l'excitateur est disposé entre les second et premier dispositifs de réflexion,
dans lequel les premier (103) et second (105) dispositifs de réflexion sont conçus pour réfléchir les signaux électromagnétiques devant être émis ou reçus et, en raison de la double réflexion produite par les premier et second dispositifs de réflexion, pour abaisser simultanément une direction de faisceau principale (104) du dispositif dans une direction horizontale ;
**caractérisé en ce que** le toit du véhicule est réalisé sous la forme du second dispositif de réflexion (105) dudit dispositif d'antenne de véhicule (100).

2. Véhicule selon la revendication 1,
dans lequel l'excitateur est réalisé sous la forme d'un élément rayonnant omnidirectionnel présentant une caractéristique de rayonnement à 360° autour de l'axe vertical du véhicule.

3. Véhicule selon l'une quelconque des revendications précédentes,
dans lequel le premier dispositif de réflexion est réalisé sous la forme d'une surface, et
dans lequel le premier dispositif de réflexion est disposé parallèlement au toit du véhicule.

4. Véhicule selon l'une quelconque des revendications précédentes, comportant un cylindre non conducteur,
dans lequel l'excitateur est réalisé sous la forme d'un dipôle excitateur (106), et
dans lequel le dipôle excitateur est toroïdal autour du cylindre non conducteur.

5. Véhicule selon l'une quelconque des revendications précédentes, ledit dispositif d'antenne de véhicule comportant en outre :
un transformateur balun (107),
dans lequel le transformateur balun est réalisé de manière à adapter un signal non équilibré d'une ligne d'alimentation de l'excitateur à un dipôle équilibré à la terre, et
dans lequel le transformateur balun est disposé à l'intérieur de l'excitateur.

6. Véhicule selon l'une quelconque des revendications précédentes, ledit dispositif d'antenne de véhicule comportant en outre :
un élément de liaison (108) présentant des première et seconde extrémités,
dans lequel l'élément de liaison s'étend verticalement entre le premier dispositif de réflexion et le toit du véhicule, et
dans lequel la première extrémité de l'élément de liaison est reliée au toit du véhicule et la seconde extrémité est reliée au premier dispositif de réflexion.

7. Véhicule selon l'une quelconque des revendications précédentes, ledit dispositif d'antenne de véhicule comportant en outre :
un second dispositif d'antenne destiné à émettre ou à recevoir des signaux électromagnétiques à une seconde fréquence, et
dans lequel le second dispositif d'antenne est disposé au-dessus du premier dispositif de réflexion.

8. Véhicule selon l'une quelconque des revendications précédentes,
dans lequel le premier dispositif de réflexion est disposé à une distance du toit du véhicule qui correspond à au moins une demi-longueur d'onde des signaux électromagnétiques devant être émis ou reçus.

9. Véhicule selon l'une quelconque des revendications précédentes comprenant un module d'antenne de véhicule destiné à émettre et à recevoir des signaux électromagnétiques à la première et à une seconde fréquence, le module d'antenne de véhicule comportant :
ledit dispositif d'antenne de véhicule comprenant le premier excitateur pour générer et recevoir des signaux électromagnétiques à la première fréquence,
le module d'antenne de véhicule comportant en outre :
un second dispositif d'antenne de véhicule comprenant un second excitateur pour générer et recevoir des signaux électromagnétiques à la seconde fréquence,
un second dispositif de réflexion, et
dans lequel le second dispositif de réflexion est conçu pour réfléchir les signaux électromagnétiques devant être émis et reçus à la seconde fréquence et pour abaisser simultanément une direction de rayonnement principale du second excitateur dans une direction horizontale.

10. Véhicule selon la revendication 9,
dans lequel les deux dispositifs d'antenne de véhicule peuvent être montés au-dessus d'un toit d'un véhicule et sont disposés horizontalement l'un au-dessus de l'autre.

11. Utilisation du dispositif d'antenne de véhicule (100) du véhicule (400) selon l'une quelconque des revendications 1 à 10 pour les communications entre véhicules et X.

12. Procédé pour émettre ou recevoir des signaux électromagnétiques à une première fréquence entre le véhicule (400) selon l'une des revendications 1 à 10 et un autre abonné, le procédé comprenant les étapes consistant à :
générer un signal électromagnétique (501),
émettre le signal électromagnétique (502) entre le toit du véhicule et le premier dispositif de réflexion,
dans lequel le premier dispositif de réflexion est disposé au-dessus du toit du véhicule,
dans lequel l'excitateur est disposé entre le toit et le premier dispositif de réflexion, et
réfléchir le signal électromagnétique rayonné à la fois sur le toit du véhicule et sur le premier dispositif de réflexion, cela entraînant un abaissement de la direction de rayonnement principale dans la direction horizontale (503).
